# EUROPÄISCHE PATENTSCHRIFT

(11) **EP 1 102 657 B1**
(45) Veröffentlichungstag und Bekanntmachung des Hinweises auf die Patenterteilung: **26.05.2004**
(21) Anmeldenummer: 99948680.6
(22) Anmeldetag: 27.07.1999
(51) Int. Cl.: B24D 3/00

(54) **WERKZEUG ZUR MATERIALBEARBEITUNG**
TOOL FOR MACHINING MATERIALS
OUTIL POUR USINER DES MATERIAUX

(30) Priorität: 07.08.1998 DE 19835687; 24.02.1999 DE 19908037
(43) Veröffentlichungstag der Anmeldung: 30.05.2001
(73) Patentinhaber: Tawakoli, Taghi, 79256 Buchenbach (DE)
(72) Erfinder: Tawakoli, Taghi, 79256 Buchenbach (DE)
(74) Vertreter: Tappe, Hartmut
(86) Internationale Anmeldenummer: PCT/DE1999/002277
(87) Internationale Veröffentlichungsnummer: WO 2000/007772

(56) Entgegenhaltungen:
- US-A- 4 988 241
- PATENT ABSTRACTS OF JAPAN vol. 1999, no. 10, 31. August 1999 (1999-08-31) & JP 11 138446 A (AGENCY OF IND SCIENCE &TECHNOL), 25. Mai 1999 (1999-05-25)
- PATENT ABSTRACTS OF JAPAN vol. 1998, no. 01, 30. Januar 1998 (1998-01-30) & JP 09 253915 A (TOYOTA BANMOTSUPUSU KK;TOYOTA AUTOM LOOM WORKS LTD), 30. September 1997 (1997-09-30)

## Beschreibung

Die vorliegende Erfindung betrifft ein Werkzeug zur abrasiven Materialbearbeitung, insbesondere ein Schleifwerkzeug, mit einem Werkzeugkörper und einer Vielzahl von Bearbeitungsbereichen, die auf einem Eingriffskreis des Werkzeugkörpers angeordnet sind und ein Bearbeitungsprofil zur profilierten Bearbeitung eines Werkstücks aufweisen, wobei die Bearbeitungsbereiche eine in Richtung der fortschreitenden Abnutzung verlaufende Profillängsachse aufweisen, das Bearbeitungsprofil der Bearbeitungsbereiche in Richtung der Profillängsachse konstant ist und die Bearbeitungsbereiche derart auf dem Eingriffskreis angeordnet sind, daß die Profillängsachse sich parallel zur Rotationsebene des Werkzeugkörpers erstreckt und den Eingriffskreis schneidet.

Werkzeuge der eingangs genannten Art, insbesondere Schleifwerkzeuge, werden zur Gestaltung von profilierten Oberflächen von Werkstücken verwendet und weisen hierzu entsprechend profilierte Bearbeitungsbereiche auf. Dabei können die profilierten Werkzeuge beispielsweise zur unmittelbaren Profilabbildung im Werkstück, wie beispielsweise bei der Herstellung von Nuten durch Schleifen, oder auch zu einer flächigen Bearbeitung der Werkstückoberfläche mit einer Relativbewegung von Werkstück und Werkzeug eingesetzt werden, wie es beispielsweise bei der Herstellung von Zahnradflanken im Schleifverfahren der Fall ist.

Bei den bekannten Werkzeugen findet aufgrund der bekannten Orientierung der Profilkontur der Bearbeitungsbereiche auf dem Eingriffskreis des Werkzeugs und des abrasiven Bearbeitungsvorgangs ein Komabtrag auf der gesamten Profilkontur statt, so daß die Profilhaltigkeit der bekannten Werkzeuge überwacht und bei Feststellung von für die weitere Bearbeitung nicht mehr tolerierbaren Veränderungen der Profilkontur durch ein sogenanntes "Abziehen" des Schleifwerkzeugs wiederhergestellt werden muß. Je nach Art und Umfang des Bearbeitungsvorgangs ergeben sich hieraus mehr oder weniger häufige Unterbrechungen des Bearbeitungsvorgangs zur Wiederherstellung der Profilhaltigkeit des Werkzeugs bzw. für einen Austausch des Schleifwerkzeugs.

Aus PATENT ABSTRACTS OF JAPAN, vol. 1998, no. 01, 30. Januar 1998 (1998-01-30) & JP 09 253 915 A (TOYOTA BANMOTSUPUSU KK; TOYOTA AUTOM LOOM WORKS LTD), 30. September 1997 (1997-09-30) ist ein Werkzeug zur abrasiven Materialbearbeitung mit einem Werkzeugkörper und einer Vielzahl von Bearbeitungsbereichen bekannt. Die Bearbeitungsbereiche sind auf einem Eingriffskreis des Werkzeugkörpers angeordnet und dienen zum Planschleifen der Oberfläche eines Werkstücks.

Der vorliegenden Erfindung liegt daher die Aufgabe zugrunde, ein Schleifwerkzeug vorzuschlagen, das eine gegenüber den bekannten Werkzeugen verbesserte Profilhaltigkeit aufweist.

Diese Aufgabe wird durch ein Werkzeug mit den Merkmalen des Anspruchs 1 gelöst.

Bei dem erfindungsgemäßen Werkzeug sind die Bearbeitungsbereiche auf dem Werkzeugkörper so ausgebildet, daß das Bearbeitungsprofil in Richtung der Profillängsachse konstant ist, und die Bearbeitungsbereiche sind derart auf dem Eingriffskreis angeordnet, dass die Profillängsachse und den Eingriffskreis schneidet, so dass infolge der Abnützung der Bearbeitungsbereiche ständig neue quer zur Profillängsachse angeordnete Profilkonturen in Kontakt mit dem zu bearbeitenden Werkstück kommen.

Mit den vorgenannten Merkmalen wird ein Werkzeug ermöglicht, bei dem abweichend von den bekannten Werkzeugen die Profilkontur in Profillängsrichtung sich nicht entlang dem Eingriffskreis erstreckt, sondern bei dem vielmehr die Profilkontur in Längsrichtung des Profils unter einem Winkel zum Eingriffskreis angeordnet ist, so dass die Profillängsachse den Eingriffskreis schneidet. Eine derartige Gestaltung der Bearbeitungsbereiche hat zur Folge, dass die Abnutzung der Bearbeitungsbereiche nur in einer Kontaktfläche auf dem Eingriffskreis erfolgt, so dass infolge der Abnutzung der Bearbeitungsbereiche ständig neue quer zur Profillängsachse angeordnete Profilkonturen in Kontakt mit dem zu bearbeitenden Werkstück kommen. Hierdurch wird das bei den bekannten Schleifwerkzeugen notwendige Abrichten bzw. Profilieren bei dem erfindungsgemäßen Schleifwerkzeug überflüssig.

Bei einer bevorzugten Ausführungsform des Schleifwerkzeugs sind die Bearbeitungsbereiche als Bearbeitungselemente ausgebildet und auf einem Aufnahmekreis des Werkzeugkörpers angeordnet. Hierdurch wird es möglich, grundsätzlich gleich ausgebildete Bearbeitungselemente durch Kombination mit geeigneten Werkzeugkörpern für unterschiedliche Schleifbearbeitungsvorgänge zu verwenden. So können grundsätzlich bei einer planaren Schleifscheibe dieselben Bearbeitungselemente verwendet werden wie bei einer Topfscheibe.

Darüber hinaus sind Kombinationen mit Werkzeugkörpern möglich, wie sie zur Fräsbearbeitung oder zum Bohren verwendet werden, wobei hier anstatt der bekannten Verwendung von Hartmetallschneideinsätzen mit bestimmter, in ihrer Geometrie konstanter Schneide ein Einsatz aus abrasivem Material verwendet wird, der eine Materialbearbeitung mit sogenannter "nicht bestimmter Schneide" ermöglicht, da infolge der Abnutzung des Schneidwerkzeugs ständig neue Schneiden mit dem Werkstück in Kontakt kommen.

Von besonderem Vorteil erweist es sich, wenn die Bearbeitungselemente mit regelmäßigem Abstand voneinander auf einem Teilkreis des Werkzeugkörpers angeordnet sind, da hierdurch beispielsweise Zwischenräume für den Abtransport von Material- und Schleifmitteln während des Bearbeitungsvorgangs geschaffen werden.

Wenn die Bearbeitungselemente zwei auf dem Eingriffskreis angeordnete Eingriffsenden aufweisen, können mit nur einem Bearbeitungselement zwei Schleifkontaktflächen zur abrasiven Bearbeitung des Werkstücks bereitgestellt werden.

Als besonders vorteilhaft erweist es sich, wenn zwischen den Bearbeitungselementen ausgebildete Zwischenräume zur Aufnahme von Zusatzeinrichtungen dienen, wie beispielsweise Zuführeinrichtungen für Kühl-Schmierstoffe oder als Sensoreinrichtungen ausgebildete Zusatzeinrichtungen, die zur Überwachung von Werkzeug- und/oder Werkstück-Parametern während der Werkstückbearbeitung einsetzbar sind.

Die Bearbeitungselemente können vollständig aus mehrschichtig übereinander angeordneten Kornschichten bestehen oder auch aus Schleifmittelträgern, auf die ein- oder mehrschichtig mit einer geeigneten Bindung Kornschichten aufgebracht sind, wobei in letzterem Fall der Schleifmittelträger infolge der abrasiven Bearbeitung verbraucht wird.

Nachfolgend werden bevorzugte Ausführungsformen des Schleifwerkzeugs anhand der Zeichnungen näher erläutert. Es zeigen:
- **Fig. 1**: eine Schleifscheibe mit auf einem Werkzeugkörper angeordneten Bearbeitungselement;
- **Fig. 2**: den Eingriffsbereich zwischen der in **Fig. 1** dargestellten Schleifscheibe und einem Werkstück bei der Herstellung einer Längsnut mittels Schleifbearbeitung;
- **Fig. 3**: eine Querschnittdarstellung des in **Fig. 2** dargestellten Eingriffsbereichs entsprechend Schnittlinienverlauf III-III in **Fig. 2;**
- **Fig. 4**: eine Schleifscheibe mit gegenüber der Darstellung in **Fig. 1** variierten Bearbeitungselementen;
- **Fig. 5**: eine Topfscheibe in Schnittdarstellung;
- **Fig. 6**: eine Teilseitenansicht der in **Fig. 5** dargestellten Topfscheibe entsprechend dem Pfeil VI in **Fig. 5**;
- **Fig. 7**: eine in der Darstellung **Fig. 6** entsprechende Darstellung einer Topfscheibe mit einem gegenüber **Fig. 6** geänderten Bearbeitungselement.

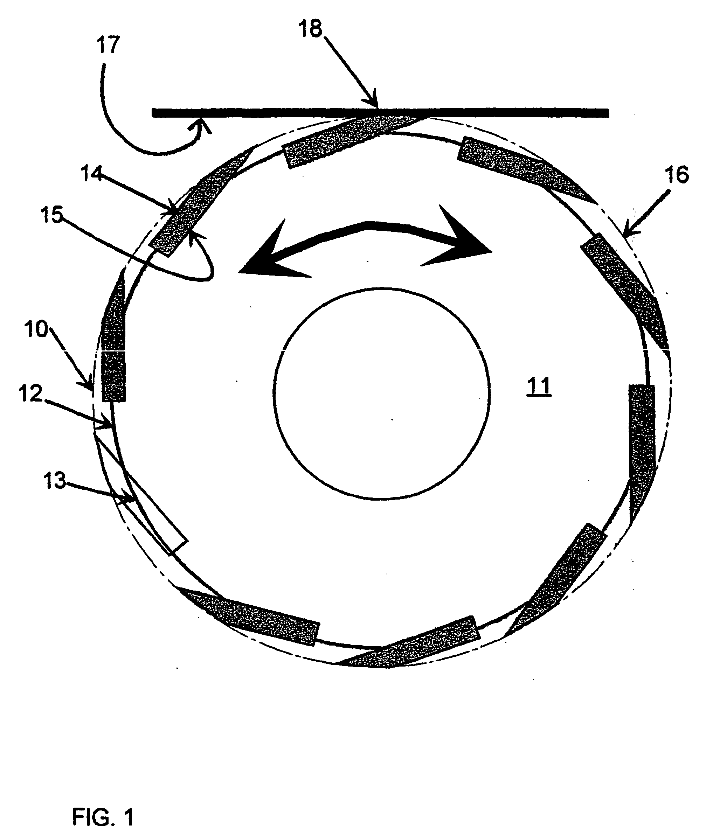

**Fig. 1** zeigt eine Schleifscheibe 10 mit einem scheibenförmigen Werkzeugkörper 11, der auf seinem äußeren Umfangsrand 12 auf einem Teilkreis 13 angeordnete Bearbeitungselemente 14 aufweist, die im vorliegenden Fall einen mehrschichtigen Aufbau aus abrasiven Körnungen in einer Kunstharzbindung aufweisen. Auch hiervon abweichende Bindungen, wie beispielsweise keramische, metallische oder galvanische Bindungen sind möglich, um Bearbeitungselemente 14 aufzubauen.

Die Bearbeitungselemente 14 sind in gleichmäßig im Umfangsrand 12 verteilt angeordneten Elementsitzen 15 aufgenommen und können dort beispielsweise durch Klebung gesichert sein.

Neben der Schleifscheibe 10 ist in **Fig. 1** mit strich-punktiertem Linienverlauf ein Eingriffskreis 16 dargestellt, der sich infolge einer Schleifbearbeitung einer Werkstückoberfläche 17 ergibt. In **Fig. 1** sind die Bearbeitungselemente 14 mit einem Konturverlauf dargestellt, der bereits eine Kontaktfläche 18 aufweist, die sich erst infolge des Schleifkontakts mit der Werkstückoberfläche 17 auf dem Eingriffskreis 16 ergibt. Im Ausgangszustand, also vor Beginn der Schleifbearbeitung bzw. vor einem Abrichtvorgang, um für eine nachfolgende Schleifbearbeitung die Schleif-Kontaktflächen 18 auf den Bearbeitungselementen 14 auszubilden, weisen die Bearbeitungselemente 14 die durch den gestrichelten Linienverlauf ergänzte Ausgangskontur auf.

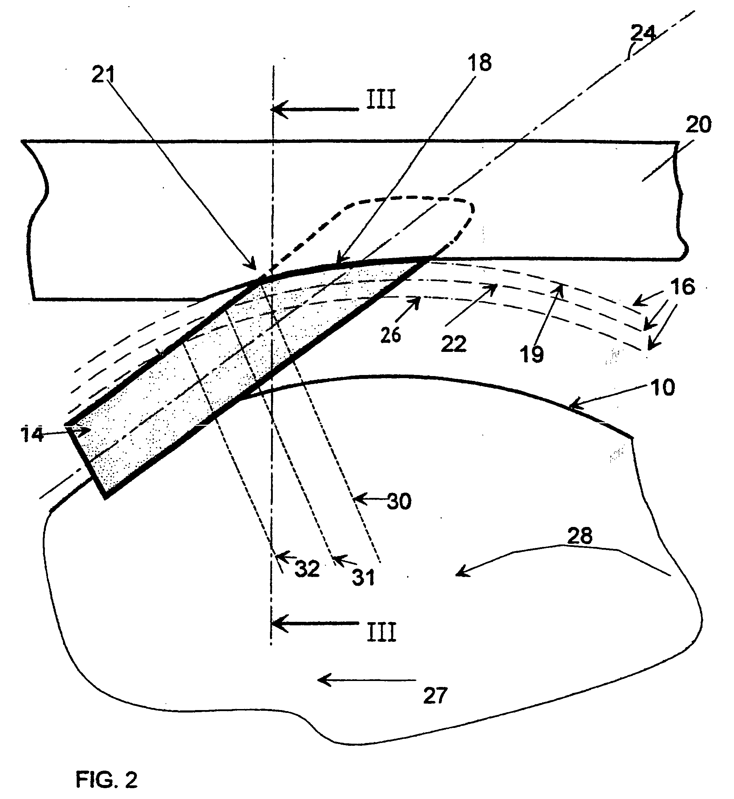

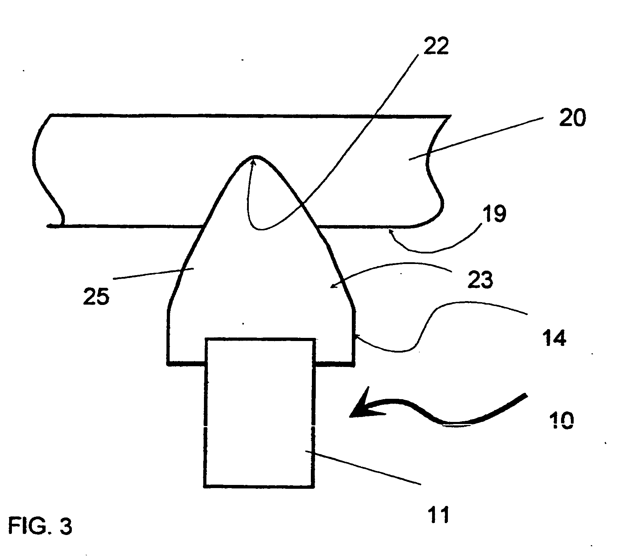

**Fig. 2** zeigt den zwischen einem Bearbeitungselement 14 und einer Werkstückoberfläche 19 bei der Schleifbearbeitung eines Werkstücks 20 gebildeten Eingriffsbereich 21 in vergrößerter Darstellung. Die in **Fig. 2** dargestellte Schleifbearbeitung dient zur Ausbildung einer längs auf der Werkstückoberfläche 19 des Werkstücks 20 angeordneten Nut 22 mit einem durch das Profil der Bearbeitungselemente 14 vorgegebenen Nutprofil. Fig. 3 zeigt das Profil 23 des im Eingriffsbereich 21 befindlichen Bearbeitungselements 14 in einem zur Werkstückoberfläche 19 senkrechten Schnitt. Das Bearbeitungselement 14 weist eine in Richtung seiner Längsachse 24 konstante Profilkontur 25 **(Fig. 3)** auf mit einer Profillängskontur 26 **(Fig. 2),** die parallel zur Längsachse 24 des Bearbeitungselementes 14 verläuft.

Zur Durchführung der in **Fig. 2** dargestellten Schleifbearbeitung kann die Schleifscheibe 10 in beliebiger Richtung 28 rotiert werden. Entsprechend der in **Fig. 2** angegebenen, beliebig ausgewählten Längsvorschubrichtung 27 nach links erfolgt die Rotation der Schleifscheibe 10 bei dem ausgewählten Beispiel ebenfalls in diese Richtung. Zum Ausgleich des infolge der Schleifbearbeitung am Bearbeitungselement 14 auftretenden Abriebs wird den beiden vorgenannten Bewegungen noch eine Zustellbewegung quer zur Werkstückoberfläche 19 in Richtung des Pfeils 29 überlagert.

Infolge der Schleifbearbeitung und der Zustellbewegung 29 bildet sich die Kontaktfläche 18 während der Schleifbearbeitung immer wieder neu auf dem jeweils neu ausgebildeten Eingriffskreis 16 aus. Dabei kommen entsprechend der Darstellung in **Fig. 2** nachfolgend entsprechend neue, unverbrauchte Profilkonturen 30, 31, 32 mit der Werkstückoberfläche 19 in Eingriff. Durch den vorstehend bereits erwähnten mehrschichtigen Aufbau des Bearbeitungselements 14 kommen entsprechend immer wieder neue Schleifkornschichten mit unverbrauchtem Profil und Schleifkorn in Eingriff mit der Werkstückoberfläche 19. Auf diese Art und Weise erfolgt bei dem in **Fig. 2** dargestellten Bearbeitungselement 14 keine Abnutzung einer andauernd in Eingriff mit einer Werkstückoberfläche befindlichen Profilkontur, sondern vielmehr eine kontinuierliche Erneuerung der im Eingriff mit der Werkstückoberfläche befindlichen Profilkontur. Somit arbeitet die in den **Fig. 1** und **2** dargestellte Schleifscheibe 10 im sogenannten "Selbstschärfebereich". Aufgrund des lediglich zeitweise erfolgenden Eingriffs zwischen der Schleifscheibe 10 und der Werkstückoberfläche 19 werden vergleichsweise geringere Bearbeitungskräfte an der Schleifscheibe 10 wirksam, so daß eine entsprechend geringere Leistungsaufnahme des Antriebsmotors der Schleifscheibe 10 die Folge ist.

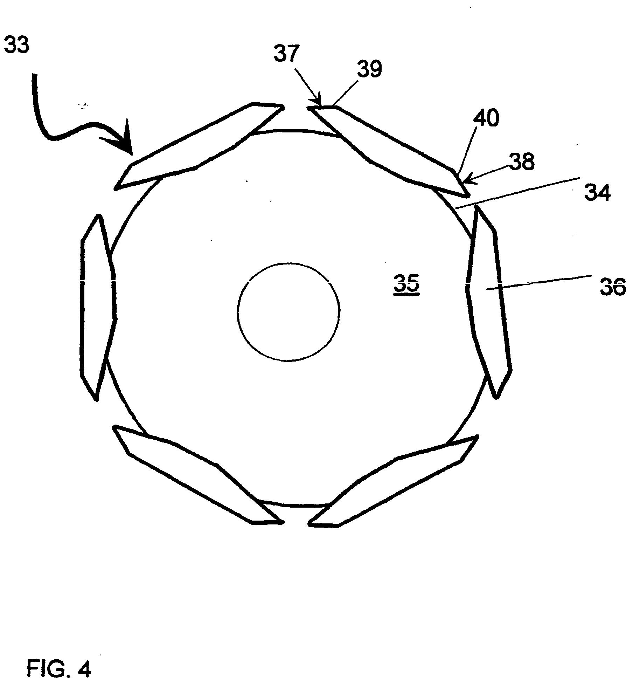

**Fig. 4** zeigt eine Schleifscheibe 33, die entsprechend der in **Fig. 1** dargestellten Schleifscheibe 10 auf einem Umfangsrand 34 eines Werkzeugkörpers 35 mit gleichmäßig verteilt angeordneten Bearbeitungselementen 36 bestückt ist. Wie im Fall der in **Fig. 1** dargestellten Schleifscheibe 10 weist die Schleifscheibe 33 aufgrund der Anordnung und Ausbildung der Bearbeitungselemente 36 insgesamt die Kontur eines Vielecks auf. Im Unterschied zu den in **Fig. 1** dargestellten Bearbeitungselementen 14 sind die Bearbeitungselemente 36 mit zwei Eingriffsenden 37, 38 zur Schleifbearbeitung einer Werkstückoberfläche versehen, so daß bei gleicher Anzahl der Bearbeitungselemente 36 die doppelte Anzahl von Kontaktflächen 39, 40 möglich ist.

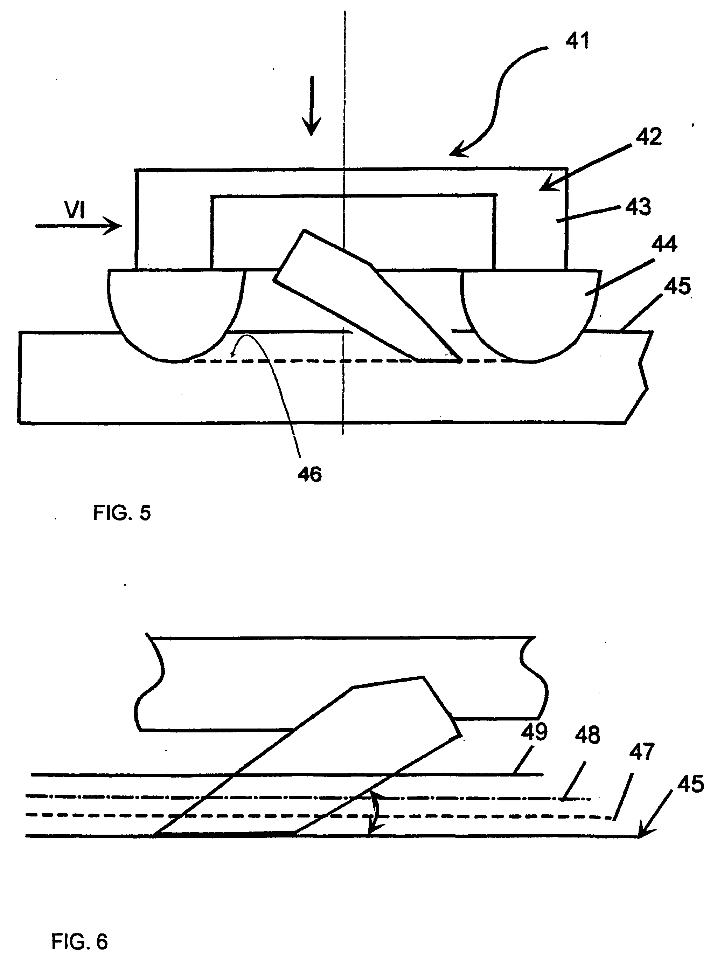

Als eine weitere Möglichkeit zur Ausbildung eines Schleifwerkzeugs unter Verwendung von Bearbeitungselementen, derart, daß die unter Bezugnahme auf Fig. 2 erläuterten vorteilhaften Effekte auftreten, sind in den **Fig. 5** bis 7 Topfscheiben 41 bzw. 51 dargestellt. **Fig. 5** zeigt die Topfscheibe 41 in einer Schnittdarstellung mit einem Werkzeugkörper 42, der an einem Stegrand 43 mit Bearbeitungselementen 44 bestückt ist. Wie in **Fig. 5** angedeutet, ist es möglich mit einer derartigen Topfscheibe 41 unter Verwendung von profilierten Bearbeitungselementen 44 auf einer Werkstückoberfläche 45 eine kreisförmige Nut 46 auszubilden.

**Fig. 6** zeigt eine vergrößerte Teildarstellung der Topfscheibe 41, die verdeutlicht, daß auch bei dieser Ausführungsform die in **Fig. 2** ausführlich dargestellten, vorteilhaften Effekte bei der Schleifbearbeitung der Werkstückoberfläche 45 auftreten, wie die in **Fig. 6** gestrichelt dargestellten Fortschrittslinien 47 bis 49 deutlich machen, die den in **Fig. 2** dargestellten Eingriffslinien 19 entsprechen.

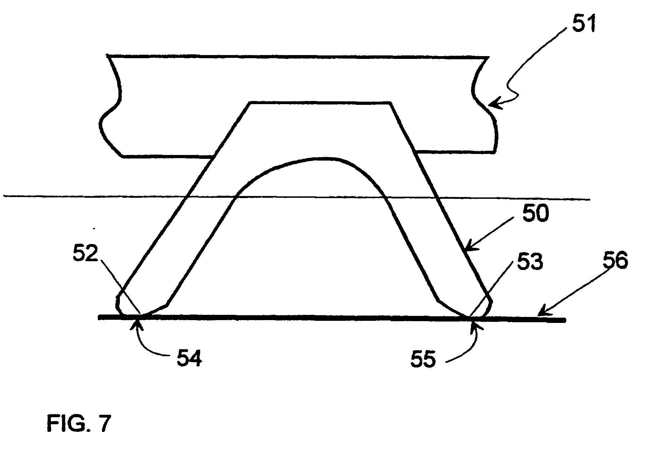

**Fig. 7** zeigt schließlich in einer der in **Fig. 6** dargestellten Ansicht entsprechenden Ansicht ein Bearbeitungselement 50 für eine Topfscheibe 51, das zwei Eingriffsenden 52, 53 zur Ausbildung zweier Kontaktflächen 54, 55 mit einer Werkstückoberfläche 56 aufweist.

Die vorstehend beispielhaft angeführten Anwendungsfälle machen die vielfältigen Einsatzmöglichkeiten des Werkzeugs deutlich. So ist beispielsweise auch ein Einsatz des Werkzeugs als Abrichtwerkzeug möglich.

## Patentansprüche

1. Werkzeug zur abrasiven Materialbearbeitung, insbesondere ein Schleifwerkzeug, mit einem Werkzeugkörper (11, 35, 42) und einer Vielzahl von Bearbeitungsbereichen (14, 36, 44, 50), die auf einem Eingriffskreis (16) des Werkzeugkörpers angeordnet sind und ein Bearbeitungsprofil (23) zur profilierten Bearbeitung eines Werkstücks (20) aufweisen,
**dadurch gekennzeichnet,**
**dass** das Bearbeitungsprofil (23) der Bearbeitungsbereiche (14, 36, 44, 50) in Richtung der Profillängsachse (24) konstant ist und die Bearbeitungsbereiche derart auf dem Eingriffskreis (16) angeordnet sind, dass die Profillängsachse den Eingriffskreis schneidet, so dass infolge der Abnützung der Bearbeitungsbereiche ständig neue quer zur Profillängsachse angeordnete Profilkonturen (25) in Kontakt mit dem zu bearbeitenden Werkstück kommen.

2. Werkzeug nach Anspruch 1,
**dadurch gekennzeichnet,**
**daß** die Bearbeitungsbereiche (14, 36, 44, 50) als Bearbeitungselemente ausgebildet sind, die auf einem Aufnahmekreis (13) des Werkzeugkörpers (11, 35, 42) angeordnet sind.

3. Werkzeug nach Anspruch 1 oder 2,
**dadurch gekennzeichnet,**
**daß** der Aufnahmekreis (13) als Teilkreis ausgebildet ist und die Bearbeitungselemente (14, 36, 44, 50) mit regelmäßigem Abstand voneinander auf dem Teilkreis des Werkzeugkörpers (11, 35, 42) angeordnet sind.

4. Werkzeug nach einem der vorangehenden Ansprüche, **dadurch gekennzeichnet,**
**daß** die Bearbeitungselemente (36, 50) jeweils zwei auf dem Eingriffskreis (16) angeordnete Eingriffsenden (37, 38; 52, 53) aufweisen.

5. Werkzeug nach einem der vorangehenden Ansprüche,
**dadurch gekennzeichnet,**
**daß** zwischen den Bearbeitungselementen (14, 36, 44, 50) ausgebildete Zwischenräume zur Aufnahme von Zusatzeinrichtungen dienen.

6. Werkzeug nach Anspruch 5,
**dadurch gekennzeichnet,**
**daß** die Zusatzeinrichtungen als Zuführeinrichtungen für Kühl-Schmier-Stoffe ausgebildet sind.

7. Werkzeug nach Anspruch 5,
**dadurch gekennzeichnet,**
**daß** die Zusatzeinrichtungen als Sensoreinrichtungen zur Überwachung von Werkzeug- und/oder Werkstück-Parametern während der Werkstückbearbeitung ausgebildet sind.

8. Werkzeug nach einem der vorangehenden Ansprüche,
**dadurch gekennzeichnet,**
**daß** die Bearbeitungselemente (14, 36, 44, 50) aus einem Schleifmittelträger mit darauf aufgebrachtem Schleifmittel gebildet sind.

## Claims

1. A tool for abrasive materials processing, in particular a grinding tool, comprising a tool body (11, 35, 42) and a multitude of working regions (14, 36, 44, 50) arranged on a circle of contact (16) of the tool body and comprising a working profile (23) for profiled processing of a workpiece (20),
**characterised in that**,
the working profile (23) of the working regions (14, 36, 44, 50) in the direction of the longitudinal axis (24) of the profile is constant and the working regions are arranged on the circle of contact (16) such that the longitudinal axis of the profile intersects the circle of contact, so that as a result of wear of the working regions, new profile contours (25) which are arranged transversely to the longitudinal axis of the profile, continuously establish contact with the workpiece to be processed.

2. A tool according to claim 1,
**characterised in that**,
the working regions (14, 36, 44, 50) are working elements which are arranged on a retainer circle (13) of the tool body (11, 35, 42).

3. A tool according to claim 1 or 2,
**characterised in that**,
the retainer circle (13) is a reference circle and the working elements (14, 36, 44, 50) are arranged so as to be regularly spaced apart from each other on the reference circle of the tool body (11, 35, 42).

4. A tool according to one of the preceding claims,
**characterised in that,**
each of the working elements (36, 50) comprises two contact ends (37, 38; 52, 53) arranged on the circle of contact (16).

5. A tool according to one of the preceding claims,
**characterised in that**,
gaps formed between the working elements (14, 36, 44, 50) are used to accommodate accessory equipment.

6. A tool according to claim 5,
**characterised in that**,
the accessory equipment is designed as feed equipment for coolant-lubricants.

7. A tool according to claim 5,
**characterised in that,**
the accessory equipment is designed as sensor equipment for monitoring tool parameters and/or workpiece parameters during workpiece processing.

8. A tool according to one of the preceding claims,
**characterised in that**,
the working elements (14, 36, 44, 50) are made from an abrasive carrier with abrasives arranged on it.

## Revendications

1. Outil pour l'usinage abrasif de matière, notamment outil de polissage, présentant un corps d'outil (11, 35, 42) et une multitude de zones d'usinage (14, 36, 44, 50) qui sont disposées sur un cercle d'engrènement (16) du corps d'outil et présentent un profil d'usinage (23) pour l'usinage profilé d'une pièce (20), **caractérisé en ce que** le profil d'usinage (23) des zones d'usinage (14, 36, 44, 50) est constant en direction de l'axe longitudinal du profil (24) et que les zones d'usinage sont disposées sur le cercle d'engrènement (16) de manière à ce que l'axe longitudinal du profil coupe le cercle d'engrènement, de sorte qu'à la suite de l'usure des zones d'usinage, de nouveaux contours profilés (25) disposés transversalement à l'axe longitudinal du profil viennent constamment en contact avec la pièce à usiner.

2. Outil selon la revendication 1, **caractérisé en ce que** les zones d'usinage (14, 36, 44, 50) se présentent sous forme d'éléments d'usinage qui sont disposés sur un cercle récepteur (13) du corps de l'outil (11, 35, 42).

3. Outil selon la revendication 1 ou 2, **caractérisé en ce que** le cercle récepteur (13) se présente sous forme d'un cercle primitif et que les éléments d'usinage (14, 36, 44, 50) sont disposés à une distance régulière les uns des autres sur le cercle primitif du corps d'outil (11, 35, 42).

4. Outil selon l'une quelconque des revendications précédentes, **caractérisé en ce que** les éléments d'usinage (36, 50) présentent respectivement deux extrémités d'engrènement (37, 38 ; 52, 53) disposées sur le cercle d'engrènement (16).

5. Outil selon l'une quelconque des revendications précédentes, **caractérisé en ce que** les intervalles formés entre les éléments d'usinage (14, 36, 44, 50) servent à recevoir des dispositifs supplémentaires.

6. Outil selon la revendication 5, **caractérisé en ce que** les dispositifs supplémentaires se présentent sous forme de dispositifs d'alimentation pour des produits refroidisseurs-lubrifiants.

7. Outil selon la revendication 5, **caractérisé en ce que** les dispositifs supplémentaires se présentent sous forme de dispositifs à capteurs pour le contrôle des paramètres d'outil et ou de pièce pendant l'usinage de la pièce.

8. Outil selon l'une quelconque des revendications précédentes, **caractérisé en ce que** les éléments d'usinage (14, 36, 44, 50) sont constitués d'un support de matière abrasive avec de la matière abrasive appliquée dessus.
